# EUROPEAN PATENT APPLICATION

(11) **EP 4 279 363 A1**
(43) Date of publication of application: **22.11.2023**
(21) Application number: 23173436.9
(22) Date of filing: 15.05.2023
(51) Int. Cl.: B62D 21/18, B62D 21/20

(54) **CHASSIS FOR RECREATIONAL VEHICLE**

(30) Priority: 18.05.2022 US 202217663922
(71) Applicant: MIG Marine, Euclid, Ohio 44117 (US)
(72) Inventor: SPIVAK, Paul, OH 44117, Euclid (US)
(74) Representative: Ashdown, Matthew

(57) **Abstract**

A chassis for a recreational vehicle includes a plurality of beams fixed together to form a rigid body, at least one beam having a plurality of walls that define an interior space of the beam, the plurality of walls including a first wall and a second wall that respectively define a first aperture and second aperture. The chassis further includes a reinforcement tube provided in the interior space, the reinforcement tube defining a channel therethrough. The first aperture, second aperture, and channel are aligned to accommodate a utility member therethrough.

## Description

### FIELD OF INVENTION

The following description relates to a chassis for a recreational vehicle, and more particularly a chassis having an aperture for accommodating a utility member of the recreational vehicle.

### BACKGROUND OF THE INVENTION

A recreational vehicle is a trailer or motorized vehicle that includes one or more living quarters designed for accommodation such as, for example, a kitchen, a bathroom, and/or one or more sleeping facilities. Common types of recreational vehicles include motorhomes, campervans, caravans (also known as travel trailers and camper trailers), fifth-wheel trailers, popup campers, and truck campers.

Recreational vehicles typically include a cabin body that is supported by a chassis. Moreover, recreational vehicles can include one or more utility systems for the cabin body (e.g., water systems, electrical systems, etc.), and each utility system can comprise a network of different members (e.g., pipes, conduits, wires, etc.). In some cases, a utility member can be arranged below the cabin. However, the structure of the chassis may interfere with its placement. To avoid such interference, the utility member can be routed below the chassis. However, the utility member at such a low elevation can get damaged if, for example, an object on the ground (or the ground itself) impacts the utility member.

### BRIEF SUMMARY

In accordance with a first aspect, a chassis for a recreational vehicle includes a plurality of beams fixed together to form a rigid body, at least one beam having a plurality of walls that define an interior space of the beam, the plurality of walls including a first wall and a second wall that respectively define a first aperture and second aperture. The chassis further includes a reinforcement tube provided in the interior space, the reinforcement tube defining a channel therethrough. The first aperture, second aperture, and channel are aligned to accommodate a utility member therethrough.

In accordance with a second aspect, a chassis assembly for a recreational vehicle includes a chassis having a plurality of beams fixed together to form a rigid body, wherein at least one beam defines a first aperture. The chassis assembly further includes a utility member extending through the first aperture

### BRIEF DESCRIPTION OF THE DRAWINGS

Embodiments of the invention are better understood when the following detailed description is read with reference to the accompanying drawings, in which:
FIG. 1 is a perspective view of an example recreational vehicle;
FIG. 2 is a schematic view of a sewage system for the recreational vehicle;
FIG. 3 is a top view of a chassis assembly for the recreational vehicle;
FIG. 4 is an enlarged perspective view of a portion of the chassis assembly; and
FIG. 5 is a cross-section view of the chassis assembly taken along line 5-5 in FIG. 4.

### DETAILED DESCRIPTION

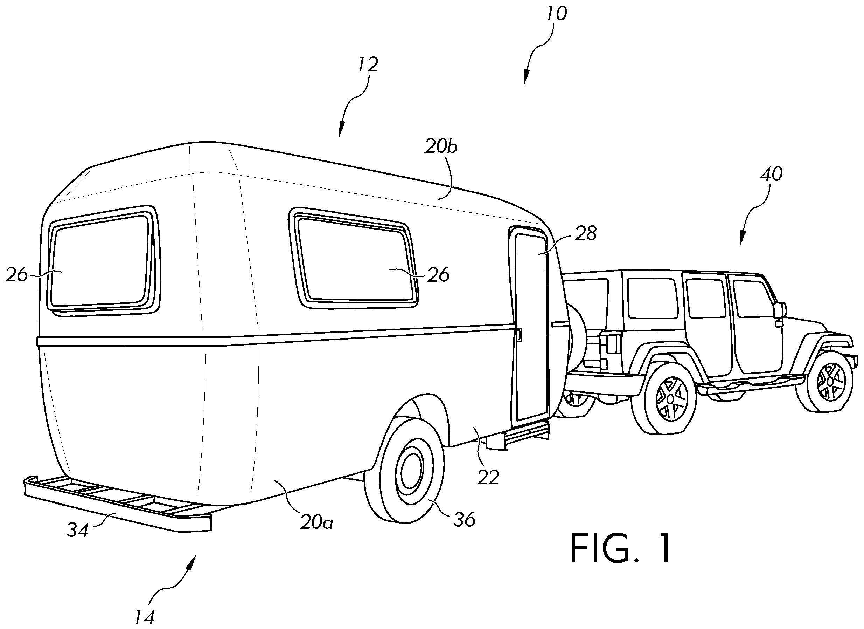

Turning to FIG. 1, a recreational vehicle 10 is shown that includes a cabin 12 and a chassis assembly 14 that supports the cabin 12. The cabin 12 includes a first shell member 20a and a second shell member 20b that are separately molded and then assembled together to form a main body 22 of cabin 12. The cabin 12 further includes a plurality of windows 26 and a door 28 for providing selective access to an interior of the cabin 12. The chassis assembly 14 includes a rigid chassis 34 that supports the cabin 12, and a plurality of wheels 36 that are rotatably coupled to and support the chassis 34.

The recreational vehicle 10 in the present example is a non-motorized trailer that offers mobile living accommodations within its interior (e.g., a kitchen, a bathroom, and one or more sleeping facilities) and can be coupled to a motorized vehicle 40 for towing. However, the recreational vehicle 10 can be other types of recreational vehicles in other embodiments such as, for example, a self-propelled motorhome.

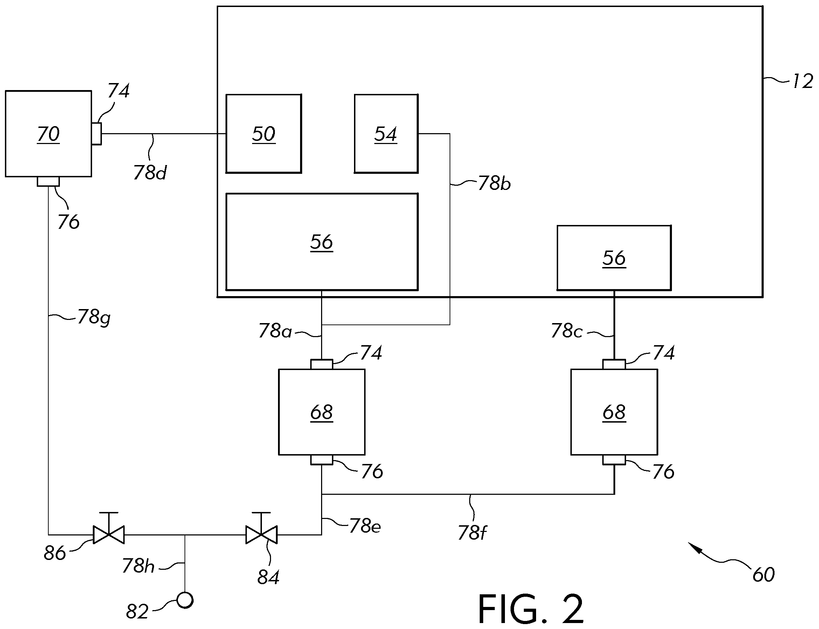

The recreational vehicle 10 can include various utility systems for servicing the vehicle 10. For example, as shown in FIG. 2, the recreational vehicle 10 in the present embodiment includes a plurality of fluid handling units (i.e., a toilet 50, a shower 52, a bathroom sink 54, and a kitchen sink 56) and a sewage system 60 for handling sewage from the fluid handling units 50, 52, 54, 56.

The sewage system 60 includes a first holding tank 66 that can receive and hold sewage from the shower 52 and bathroom sink 54; a second holding tank 68 that can receive and hold sewage from the kitchen sink 56; and a third holding tank 70 that can receive and hold sewage from the toilet 50. Each holding tank 66, 68, 70 comprises a substantially-closed container body having a single inlet 74 and single outlet 76. The shower 52 is fluidly coupled to the inlet 74 of the first holding tank 66 via a sewage line 78a, and the bathroom sink 54 is fluidly coupled to the inlet 74 of the first holding tank 66 via a sewage line 78b that feeds into the sewage line 78a. The kitchen sink 56 and toilet 50 are respectively fluidly coupled to the inlets 74 of the second and third holding tanks 68, 70 via sewage lines 78c, 78d.

The sewage system 60 further includes a discharge outlet 82 and a pair of valves 84, 86 that are operable to provide selective fluid communication between the discharge outlet 82 and the holding tanks 66, 68, 70. The outlet 76 of the first holding tank 66 is fluidly coupled to an inlet of the valve 84 via a sewage line 78e, and the outlet 76 of the second holding tank 68 is fluidly coupled to the inlet of the valve 84 via a sewage line 78f that feeds into the sewage line 78e. Moreover, the outlet 76 of the third holding tank 70 is fluidly coupled to an inlet of the valve 86 via a sewage line 78g. Finally, the outlets of the valves 84, 86 are fluidly connected to a common sewage line 78h that terminates at the discharge outlet 82.

Each valve 84, 86 in the present embodiment is a knife gate valve having an actuator that is operable to switch the valve between open and closed states in order to provide selective fluid communication between the sewage lines at its inlet and outlet. Moreover, the sewage lines 78 described above can each comprise any configuration of one or more fluid elements that are configured to convey fluid from one end of the sewage line to the other (for the purpose of this disclosure, a "fluid element" is any element configured to contain fluid and/or convey fluid therethrough such as, for example, a pipe, tube, hose, pipe fitting, pump, valve, holding tank, etc.).

As discussed further below, the first and second holding tanks 66, 68 of the sewage system 60 are mounted on the chassis 34 outside of the cabin 12. Indeed, most elements of the sewage system 60 in the present embodiment are arranged outside of the cabin 12 except for portions of the sewage lines 78a-d. However, it is to be appreciated that other portions of the sewage system 60 may be arranged within the cabin 12 in some embodiments without departing from the scope of the disclosure. Moreover, in some examples, the entire sewage system 60 can be arranged outside of the cabin 12.

The sewage system 60 is preferably configured such that sewage within the system 60 will be biased towards the valves 84, 86 and discharge outlet 82 via gravity. For example, the valves 84, 86 and discharge outlet 82 can be arranged at elevations below the fluid handling devices 50, 52, 54, 56, and the sewage lines 78 can be configured to extend at downward slopes from the fluid handling devices 50, 52, 54, 56 to the holding tanks 66, 68, 70, valves 84, 86, and discharge outlet 82. In this manner, sewage from the fluid handling devices 50, 52, 54, 56 will flow naturally through the system 60 toward the valves 84, 86 and discharge outlet 82. When the valves 84, 86 are closed, sewage from the fluid handling devices 50, 52, 54, 56 will accumulate within the sewage lines 78 and holding tanks 66, 68, 70 depending on its total volume. When the valves 84, 86 are later opened, any sewage accumulated within the system 60 will flow naturally toward and out of the discharge outlet 82.

It is to be appreciated that one or more portions of the sewage system 60 may convey fluid against gravity in some embodiments. For instance, certain segments of a sewage line 78 may convey sewage at an uphill slope. In such embodiments, the sewage system 60 may comprise one or more pumps that are operable to motivate sewage through the system 60. Moreover, it is to be appreciated that the sewage system 60 can comprise other numbers of holding tanks, valves, sewage lines, and discharge outlets than disclosed in the present embodiment. Broadly speaking, the sewage system 60 can comprise any configuration of one or more fluid elements that are configured and/or operable to convey sewage from one or more fluid handling devices of the vehicle 10 to one or more discharge outlets.

The vehicle 10 can include other utility systems such as, for example, a water system for containing clean water and/or conveying water to its fluid handling devices; a gas system for storing gas (e.g., propane, natural gas, etc.) and/or supplying gas to one or more gas appliances (e.g., stove, furnace, etc.); or an electrical system for storing electricity and/or conveying electricity to one or more electric appliances (e.g., refrigerator, air conditioner, etc.). Moreover, each utility system of the vehicle 10 can comprise its own configuration of one or more utility members. For the purpose of this disclosure, a "utility member" is any element of a utility system configured to contain, store, and/or convey the system's associated commodity (e.g., water, electricity, gas, etc.) or influent (e.g., sewage). For instance, a utility member of the sewage system 60 would be any element of the system configured to contain and/or convey sewage from the fluid handling devices 50, 52, 54, 56, while a utility member of an electrical system would be any element of the system configured to store and/or convey electricity for the vehicle 10.

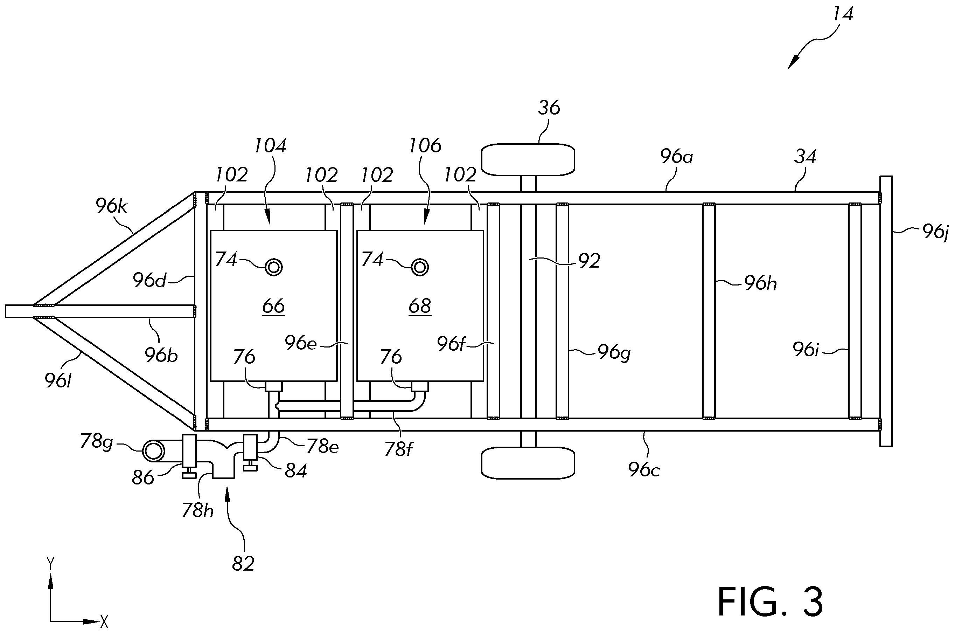

Turning to FIG. 3, the chassis assembly 14 of the vehicle 10 will now be described in further detail. The wheels 36 of the assembly are coupled to opposite ends of an axle 92, which is rotatably coupled to the chassis 34. Meanwhile, the chassis 34 comprises a plurality of beams 96 that are welded together to form a rigid body.

In particular, the chassis 34 includes a plurality of beams 96a-c that extend longitudinally in a first direction Di; a plurality of beams 96d-j that extend longitudinally in a second direction D₂ that is substantially perpendicular to the first direction Di; and a plurality of beams 96h, 96i that extend longitudinally in directions oblique to the first and second directions D₁, D₂ (for the purposes of this disclosure, "substantially perpendicular" as used herein means within 10° or less of perpendicular, and preferably within 5° or less of perpendicular). The beams 96a, 96b, 96d, 96j form a rectangular frame, while the beams 96e-i form crossmembers within the frame that extend completely across the frame.

The beams 96 are preferably rectangular beams with a hollow interior to mitigate their weight. When arranged and welded together as shown in FIG. 3, the beams 96 can form a strong and rigid chassis 34 that can support the cabin 12 above. Moreover, the chassis 34 can include various mounting elements for supporting or fixing structure thereto.

For example, the chassis 34 can include mounting brackets 102 that are fixed to and extend along bottom sides of the beams 96d-f for supporting the first and second holding tanks 66, 68. The mounting brackets 102 and beams 96d-f can define receiving spaces 104, 106 that can respectively accommodate the first and second holding tanks 66, 68. The first and second holding tanks 66, 68 can rest on the mounting brackets 102 and in some examples, be fixed to the mounting brackets 102 and/or adjacent beams 96 using fasteners and/or straps that hold the tanks 66, 68 in place. The cabin 12 can then be mounted on the chassis 34 such that it sits over and covers the spaces 104, 106, further securing the tanks 66, 68 within. The cabin 12 can be fixed to the chassis 34 using, for example, fasteners or other conventional means.

It is to be appreciated that the shape, number, and configuration of the beams 96 and any mounting structure for the chassis 34 can vary by embodiment. Moreover, the beams 96 can be fixed together using other means besides welding such as, for example, fasteners. Broadly speaking, the chassis 34 can comprise any number and configuration of beams that are fixed together to form a rigid body for supporting the cabin 12.

As discussed above, the recreational vehicle 10 can comprise one or more utility systems, each system comprising one or more utility members for containing, storing, and/or conveying the system's associated commodity or influent. In some cases, a utility member may be located under the cabin 12. However, the beams 96 of the chassis 34 may interfere with its placement. To avoid such interference, the utility member can be routed below one or more beams 96. However, the utility member at such a low elevation can get damaged if, for example, an object on the ground (or the ground itself) impacts the utility member.

In the present embodiment, the sewage system 60 has multiple components arranged below the cabin 12, including the first and second holding tanks 66, 68 and sewage lines 78e, 78f. The sewage lines 78e, 78f extend respectively across beams 96c, 96e. Therefore, to avoid interference with these 96c, 96e without having to route the sewage lines 78e, 78f at a lower elevation, a new and useful configuration of the beams 96c, 96e and sewage lines 78e, 78f will now be described.

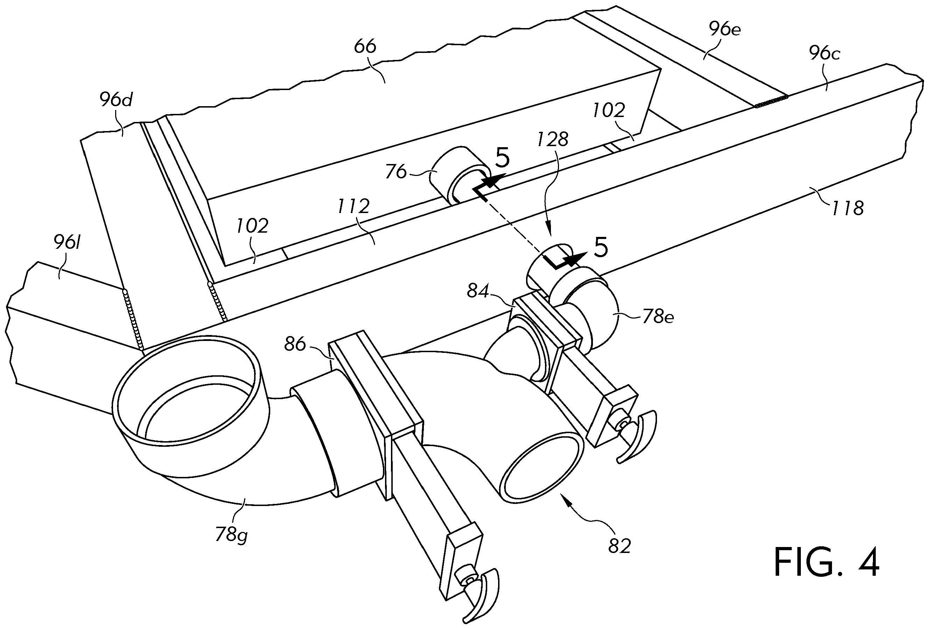

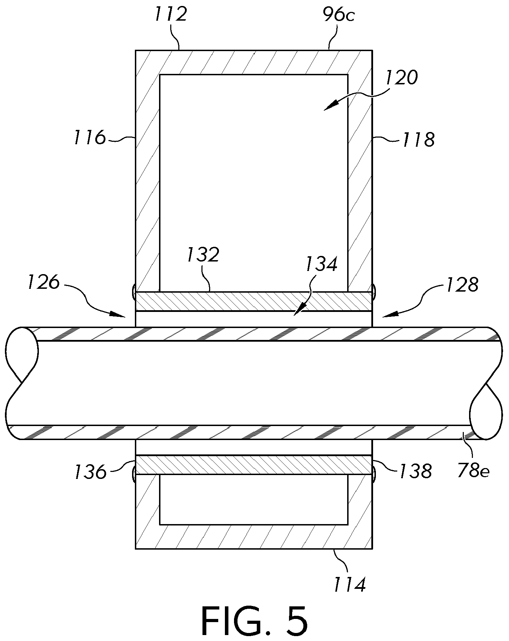

As shown in the FIGS. 4 and 5, the beam 96c is a hollow, rectangular beam having an upper wall 112, a bottom wall 114, a first side wall 116, and a second side wall 118 that collectively define an interior space 120 of the beam 96c. The first and second side walls 116, 118 respectively define first and second apertures 126, 128, and a pipe segment of the sewage line 78e is routed through the first and second apertures 126, 128. In this manner, the sewage line 78e can extend across the beam 96c without having to route it below, thereby mitigating a risk of the damage to the sewage line 78e.

Notably, the apertures 126, 128 can weaken the beam 96c as compared to a similar beam having solid walls without any apertures. Accordingly, a reinforcement tube 132 may be provided in the space 120 of the beam 96c to preserve its strength. More specifically, the reinforcement tube 132 is a cylindrical body defining a channel 134 that is aligned with the first and second apertures 126, 128 such that the sewage line 78e can extend therethrough. The tube 132 has a first end portion 136 that is provided in the first aperture 126 and welded to the first side wall 116; and a second end portion 138 that is provided in the second aperture 128 and welded to the second side wall 118. To facilitate such welding, the reinforcement tube 132 preferably has an outer diameter that is substantially similar to but smaller than the inner diameters of the first and second apertures 126, 128 (for the purposes of this disclosure, two diameters are substantially similar if a difference between the diameters is ¼ inch or less, preferably 1/8 inch or less, and more preferably 1/16 inch or less). In this manner, the tube 132 can fit within the first and second apertures 126, 128 but still be close enough to their outer edges to enable welding thereto. However, larger differences between the two diameters may still be possible in some embodiments.

The tube 132 as configured can reinforce the beam 96c at its points of attachment and thus compensate for any loss of strength that may occur due to the presence of the apertures 126, 128. However, it is to be appreciated that other reinforcement structures and configurations may be used to reinforce the beam 96c. For instance, the tube 132 may extend completely through one or both apertures 126, 128 in some examples. In other examples, reinforcement plates or brackets can be welded to the sides walls 116, 118 near and/or around the apertures 126, 128.

Still further, the beam 96c can comprise other shapes and configurations with one or more apertures that permit the sewage line 78e to extend therethrough. For instance, the beam 96c may be a solid wall with a single aperture that the line 78e passes through. Moreover, the beam 96c can accommodate additional and/or alternative utility members through its aperture(s). For instance, the beam 96c may accommodate different portions of the sewage system 60 therethrough and/or utility members of other systems (e.g., electrical wires of an electrical system, water lines of a water system, etc.). Broadly speaking, the beam 96c can comprise any configuration defining one or more apertures that accommodate a utility member therethrough. The same applies for any other beam(s) 96 of the chassis 34. For instance, the beam 96e of the present embodiment has a configuration similar to the beam 96c which accommodates the sewage line 78f therethrough.

Illustrative embodiments have been described, hereinabove. It will be apparent to those skilled in the art that the above apparatuses and methods may incorporate changes and modifications without departing from the scope of this disclosure. The invention is therefore not limited to particular details of this disclosure, and will encompass modifications and adaptions thereof within the spirit and the scope of the appended claims.

## Claims

1. A chassis for a recreational vehicle, comprising:
a plurality of beams fixed together to form a rigid body, wherein at least one beam comprises a plurality of walls that define an interior space of the beam, the plurality of walls including a first wall and a second wall that respectively define a first aperture and second aperture; and
a reinforcement tube provided in the interior space, the reinforcement tube defining a channel therethrough,
wherein the first aperture, second aperture, and channel are aligned to accommodate a utility member therethrough.

2. The chassis according to claim 1, wherein the reinforcement tube has a first end portion welded to the first wall and a second end portion welded to the second wall.

3. The chassis according to claim 2, wherein the first end portion is provided in the first aperture and the second end portion is provided in the second aperture.

4. The chassis according to claim 3, wherein:
the first aperture has a first inner diameter,
the second aperture has a second inner diameter, and
the reinforcement tube has an outer diameter that is substantially similar to but smaller than the first inner diameter and second inner diameter.

5. A chassis assembly comprising:
the chassis according to claim 1; and
the utility member extending through the first aperture, second aperture, and channel of the chassis.

6. The chassis assembly according to claim 5, wherein the utility member is a sewage line.

7. The chassis assembly according to claim 6, further comprising a holding tank supported by the chassis, wherein the sewage line is fluidly coupled to an outlet of the holding tank.

8. The chassis assembly according to claim 7, wherein the chassis defines a receiving space that accommodates the holding tank.

9. The chassis assembly according to claim 7, further comprising a discharge outlet, wherein the sewage line is fluidly coupled between the discharge outlet and holding tank such that fluid being conveyed from the holding tank to the discharge outlet passes through the sewage line and the first aperture, second aperture, and channel of the chassis.

10. The chassis assembly according to claim 9, further comprising a valve fluidly coupled between the discharge outlet and the sewage line, the valve being operable between an open state and a closed state to provide selective fluid communication between the discharge outlet and the sewage line.

11. A chassis assembly for a recreational vehicle, comprising:
a chassis including a plurality of beams fixed together to form a rigid body, wherein at least one beam defines a first aperture; and
a utility member extending through the first aperture.

12. The chassis assembly according to claim 11, wherein the utility member is a sewage line.

13. The chassis assembly according to claim 12, further comprising a holding tank supported by the chassis, wherein the sewage line is fluidly coupled to an outlet of the holding tank.

14. The chassis assembly according to claim 13, wherein the chassis defines a receiving space that accommodates the holding tank.

15. The chassis assembly according to claim 13, further comprising a discharge outlet, wherein the sewage line is fluidly coupled between the discharge outlet and holding tank such that fluid being conveyed from the holding tank to the discharge outlet passes through the sewage line and the first aperture of the chassis.
